# EUROPÄISCHE PATENTSCHRIFT

(11) **EP 0 948 565 B1**
(45) Veröffentlichungstag und Bekanntmachung des Hinweises auf die Patenterteilung: **21.05.2003**
(21) Anmeldenummer: 97952952.6
(22) Anmeldetag: 17.12.1997
(51) Int. Cl.: C08K 5/526

(54) **VERNETZBARE MISCHUNGEN UND EIN VERFAHREN ZU DEREN HERSTELLUNG**
CROSS-LINKABLE MIXTURES AND METHOD FOR PRODUCING SAME
MELANGES RETICULABLES ET PROCEDE PERMETTANT DE LES PRODUIRE

(30) Priorität: 30.12.1996 DE 19654690
(43) Veröffentlichungstag der Anmeldung: 13.10.1999
(73) Patentinhaber: GE Bayer Silicones GmbH & Co. KG, 40699 Erkrath (DE)
(72) Erfinder: HASELHORST, Rolf, D-51371 Leverkusen (DE); BOX, Emile, D-41541 Dormagen (DE)
(86) Internationale Anmeldenummer: EP9707084
(87) Internationale Veröffentlichungsnummer: WO98029497

(56) Entgegenhaltungen:
- EP-A- 0 761 759
- US-A- 5 380 812

## Beschreibung

Die vorliegende Erfindung betrifft vernetzbare Mischungen und ein Verfahren zu deren Herstellung.
Bei der Verwendung additionsvernetzender Siliconkautschuksysteme taucht allgemein das Problem auf, daß die einmal hergestellte reaktive Mischung auch bei Raumtemperatur eine endliche Aushärtegeschwindigkeit besitzt. Dies macht sich insbesondere dann störend bemerkbar, wenn die Maschinen aufgrund technischer Störungen oder anderer Ursachen längere Zeit stillstehen. In so einem Fall kann die in den Maschinen befindliche reaktive Siliconkautschukmischung auch bei Raumtemperatur vernetzen, was sehr aufwendige Reinigungsarbeiten vor der Wiederinbetriebnahme zur Folge hat.
Aus diesem Grund besteht am Markt seit langer Zeit der Bedarf nach additionsvernetzenden Siliconkautschuksystemen, die idealerweise bei Raumtemperatur überhaupt nicht aushärten und bei Verarbeitungsbedingungen eine möglichst hohe Reaktionsgeschwindigkeit haben.
Zur Realisierung dieses Zieles werden üblicherweise sogenannte Inhibitoren den Kautschuksystemen zugesetzt. Eine Gruppe von Inhibitoren sind phosphororganische Verbindungen. So wird beispielsweise in DE-A-3 635 236 die Verwendung cyclometallisierter Platinphosphitkomplexe zur Erhöhung der Lagerstabilität bei Raumtemperatur beschrieben. Die dort erwähnten Katalysatorinhibitorkomplexe erhöhen die Topfzeit bei Raumtemperatur, haben jedoch den Nachteil, daß sie aufwendig herzustellen sind, was mit zusätzlichen Kosten bei der Produktion verbunden ist. In EP-A-662 490 (US 5380812) werden allgemein phosphororganische Verbindungen als Inhibitoren in additionsvernetzenden Siliconsystemen beschrieben. Die dort erwähnten aliphatischen und aromatischen Phosphine haben jedoch den Nachteil, daß sie bei Verarbeitungsbedingungen (T = 120 bis 170°C) eine deutliche Verlangsamung der Reaktionsgeschwindigkeit verursachen. In DE-P 19532316.5 werden vernetzbare additionsvernetzende Mischungen beschrieben, die neben einem Hydrosilylierungskatalysator eine phosphororganische Verbindung und einen Inhibitor enthalten. Die dort beschriebene Einstellung über eine 2-Komponentensystem ist jedoch aufwendig. Mischungen, die eine völlige Inhibierung bei Raumtemperatur und die völlige Nichtbeeinflussung der Reaktionsgeschwindigkeit unter Aushärtebedingungen mit einem Zusatzstoff aufweisen, sind bislang nicht bekannt.

Es bestand daher die Aufgabe, geeignete Mischungen bereitzustellen, die auch in schnellen, additionsvernetzenden Siliconsystemen die Aktivität des Katalysators bei Raumtemperatur herabsetzen, ohne die Aushärtezeiten bei Reaktionsbedingungen zu verlängern.

Zudem sollte die Mischung möglichst einfach, d.h. aus möglichst wenigen Komponenten, aufgebaut sein.

Es wurde nun gefunden, daß die Probleme in additionsvernetzenden Polysiloxanmischungen dadurch gelöst werden können, daß diese Pt-Verbindungen oder Pt elementar oder eine andere die Hydrosilierung katalysierende Substanz und mindestens ein sterisch anspruchsvolles substituiertes Triarylphosphit des weiter unten näher spezifizierten Typs enthalten. Die Wirkungsweise der Phosphor-organischen Verbindung als Inhibitor kommt dabei der eines idealen Inhibitors (Schalterfunktion, Schwellwertcharakteristik) umso näher, je sterisch anspruchsvoller der aromatische Rest R ist.

Gegenstand der Erfindung sind daher vernetzbare Mischungen, enthaltend als Komponenten
a) mindestens ein Polysiloxan, das über mindestens zwei olefinisch oder acetylenisch ungesättigte Mehrfachbindungen verfügt,
b) mindestens ein Polyhydrogensiloxan, das über mindestens zwei direkt an das Silicium gebundene Wasserstoffatome verfügt,
c) mindestens eine die Hydrosilylierung katalysierende Substanz,
d) mindestens eine Phosphorverbindung, wie im Patentanspruch 1 definiert,
   und
e) gegebenenfalls weitere Hilfsstoffe.

Komponente a) im Sinne der Erfindung ist vorzugsweise ein cyclisches, lineares oder verzweigtes Polysiloxan, das aus Einheiten der allgemeinen Formel (II)

(R³)ₐ(R⁴)_{b}SiO_{(4-a-b)/2)} (II)

aufgebaut ist. Hierin bedeuten R³ ein C₂-C₈-Alkenylradikal, z.B. Vinyl, Allyl, 1-Butenyl, 1-Hexenyl etc. Die Alkenylradikale können an Siliciumatome innerhalb der Kette oder am Ende derselben gebunden sein. R⁴ ist ein einwertiger, gesättigter Kohlenwasserstoffrest mit bis zu 10 Kohlenstoffatomen aus der Gruppe der substituierten und unsubstituierten Alkyl-, Aryl-, und Arylalkylradikale. Beispiele für die einwertigen Radikale R⁴ sind Methyl, Ethyl, Propyl, Isopropyl, Butyl, Octyl, u.s.w., Cyclobutyl, Cyclopentyl, Cyclohexyl, u.s.w., Phenyl, Tolyl, Xylyl, Naphthyl, u.s.w. Benzyl, Phenylethyl, Phenylpropyl. Für die ganzen Zahlen a und b gilt 0 < a < 3 bzw. 0 < b < 3 und 0 < a + b < 4. Vorzugsweise ist a gleich 0 oder 1. In den Radikalen R4 der vorliegenden Erfindung können einige oder alle Wasserstoffatome durch Fluorund/oder Chlor-, Brom-, bzw. Iodatome oder Cyanoradikale substituiert sein. Dies bedeutet, daß R4 beispielsweise auch ein Chlormethyl-, Trifluoropropyl-, Chlorophenyl-, Dibromophenyl-, -Cyanoethyl-, -Cyanopropyl oder -Cyanopropylradikal sein kann.

Mit der dem Fachmann vertrauten Nomenklatur
- M:: (CH₃)₃SiO_{1/2}
- D:: (CH₃)₂SiO_{2/2}
- T:: (CH₃)SiO_{3/2}
- M^{Vi}:: (CH₂=CH)(CH₃)₂SiO_{1/2}
- D^{Vi}:: (CH₂=CH)(CH3)SiO_{2/2}
lassen sich folgende Beispiele für die Komponente a) angeben:

M₂D₁₀₀D^{Vi}₃

M^{Vi}₂D₁₈₀

M^{Vi}MD₁₀₀D^{Vi}₃

T₅D₅₅₀M^{Vi}₇

T₃D₅₀₀M^{Vi}₂M₃

T₆D₃₀₀D^{Vi}M^{Vi}₄M₄

M^{Vi}₂D₁₅₀₀

M^{Vi}₂ D₄₀₀₀D^{Vi}₅₀

sowie

M₂ D₂₀₀₀D^{Vi}₅

Der molare Anteil an ungesättigten Resten des Typs R³ kann beliebig gewählt werden.

In der Komponente a) sollte bevorzugt der molare Anteil an ungesättigten Resten des Typs R³ zwischen 10⁻³ und 10 mmol pro Gramm liegen. Der Begriff zwischen schließt sowohl hier als auch im folgenden immer die jeweils angegebenen Eckwerte mit ein. Die Viskosität der Komponente a) beträgt vorzugsweise zwischen 10⁻³ und 1.000.000 Pa.s bei 25°C.

Die Komponente b) im Sinne der vorliegenden Erfindung ist ein Polysiloxan, das aus Einheiten der allgemeinen Formel (III)

H_{c}(R⁴)_{d}SiO_{(4-c-d)/2} (III)

aufgebaut ist, wobei R⁴ oben bereits definiert wurde und R⁴ gegebenenfalls auch die Bedeutung von R³ haben kann. Die stöchiometrischen Indices c und d sind ganze Zahlen mit 0 ≤ d ≤ 3 und 0 ≤ c ≤ 2 sowie 0 ≤ c + d ≤ 4. Bevorzugt ist 0 ≤ c ≤ 1.

Mit der dem Fachmann geläufigen Nomenklatur
- Q:: SiO_{4/2}
- M^{H}:: H(CH₃)₂SiO_{1/2}
- D^{H}:: H(CH₃)SiO_{2/2}
lassen sich folgende Beispiele für die Komponente b) angeben:

M^{H}₂D₁₀,

M₂D₁₀D^{H}₁₀,

M^{H}₂D₂₀D^{H}₁₀,

M^{Vi}₂D^{H}₁₁,

M₂D^{Vi}₃D^{H}₈,

sowie

QM^{H}_{1,3-1,8} D_{0,1},

(M, D, M^{Vi} und D^{Vi} wie bei Komponente a) definiert.).

Der molare Anteil von direkt an ein Siliciumatom gebundenen Wasserstoffatomen in der Komponente b) kann beliebig gewählt werden.

In der Komponente b) liegt vorzugsweise der molare Anteil von direkt an ein Siliciumatom gebundenen Wasserstoffatomen zwischen 0,01 und 17 mmol, besonders bevorzugt zwischen 0,1 und 17 mmol und ganz besonders bevorzugt zwischen 1 und 17 mmol pro Gramm der Komponente b).

In der beschriebenen Gesamtmischung sollten vorzugsweise die Komponenten a) und b) in einem solchen Mengenverhältnis vorliegen, daß das molare Verhältnis von direkt an ein Siliciumatom gebundenen Wasserstoffatomen (SiH) in der Komponente b) zu den ungesättigten Resten (Si-Vinyl) in der Komponente a) zwischen 0,05 und 20 liegt, besonders bevorzugt zwischen 0,5 und 10 und ganz besonders bevorzugt zwischen 1 und 5.

Komponente c) im Sinne der Erfindung umfaßt vorzugsweise die Elemente Platin, Rhodium, Iridium, Nickel, Ruthenium und/oder Palladium elementar auf einer Trägersubstanz oder in Form ihrer Verbindungen. Bevorzugt sind Platinverbindungen oder Platinkomplexe, wie zum Beispiel H₂PtCl₆, Platin-Olefinkomplexe, Platin-Alkoholatkomplexe, Platin-Vinylsiloxankomplexe oder auch elemtares Platin auf einer Trägersubstanz, wie z. B. Aktivkohle, Al₂O₃ oder SiO₂. Besonders bevorzugt ist Komponente c) ein Platin-Vinylsiloxankomplex. Platin-Vinylsiloxankomplexe verfügen vorzugsweise im Siloxan über mindestens 2 olefinisch ungesättigte Doppelbindungen, siehe z.B. US-A 3 715 334.

Unter den Begriff Siloxan fallen auch Polysiloxane, d.h. zum Beispiel auch Vinylpolysiloxane. Der Anteil der Komponente c) an der Gesamtmischung sollte vorzugsweise zwischen 1 und 1000 ppm, besonders bevorzugt zwischen 1 und 500 ppm und ganz besonders bevorzugt zwischen 1 und 100 ppm liegen.

Die Komponente d) im Sinne der Erfindung ist eine Verbindung der Formel 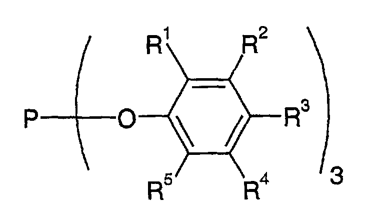 mit
R¹, R², R³, R⁴, R⁵ = H, CₙH₂ₙ₊₁ und n = 1-15, CₐH₂ₐ₋₁ und a = 3-15 und/oder CₙP₂ₙ₊₁,
wobei
R¹, R², R³, R⁴ und R⁵ gleich oder verschieden sein können und nicht alle Reste R¹, R², R³, R⁴ und R⁵ = H sind, und worin die genannten aliphatischen Reste linear oder verzweigt sind.

Die genannten aliphatischen Reste können linear oder verzweigt sein, gegebenenfalls können die darin enthaltenen H-Atome durch Gruppen wie -NH2, -COOH, -F, -Br, -Cl, -CN, -C₆H₅, -C₆H₄(CH₃) ersetzt sein.

Die Komponente d) der vorliegenden Erfindung wird vorzugsweise in einem Mengenanteil von 1 ppm bis 50 000 ppm, bezogen auf das Gesamtgewicht der Mischung, zugesetzt, besonders bevorzugt 10 ppm bis 10 000 ppm und ganz besonders bevorzugt zwischen 20 ppm und 2000 ppm.

Die Komponenten d) sind z.B. nach dem in Methoden der Organ. Chemie, Huben-Weil, Band XII/2, 1964, 4.Aufl., S.59-61, beschriebenen Verfahren herstellbar.

Hilfsstoffe (Komponente e)) im Sinne der Erfindung sind z.B. Polysiloxanharze, die aus Bausteinen der allgemeinen Formeln (II) und (III) aufgebaut sind, Füllstoffe, die die mechanischen und elektrischen Eigenschaften der ausgehärteten erfindungsgemäßen Mischung positiv beeinflussen, wie z.B. pyrogene und gefällte Kieselsäuren mit einer BET-Oberfläche von 50 bis 500 m²/g. Derartige Füllstoffe können oberflächenmodifiziert sein, z.B. mit siliziumorganischen Verbindungen. Die Modifizierung kann auch während der Einarbeitung in das Polymer durch Zusatz von z.B. α,ω-OH endgestoppte Oligo- bzw. Polysiloxane oder Hexamethyldisilazan oder 1,3-Divinyl-1,1,3,3-tetramethyldisilazan unter Zusatz von Wasser erreicht werden.

Weiter können als Füllstoffe Substanzen wie z.B. Diatomeenerden, feinteilige Quarzmehle, amorphe Kieselsäuren oder Ruße sowie Al(OH)₃, keramisierbare Oxide u.ä. eingesetzt werden.

In einer weiteren Ausführungsform enthalten die erfindungsgemäßen Mischungen zusätzlich Wasser oder ein organisches Lösungsmittel.

In einer bevorzugten Ausführungsform der Erfindung liegen die Komponenten a) und b) in einem solchen Mengenverhältnis vor,
daß das Verhältnis SiH:Si-Vinyl zwischen 0,1 und 10,
der Gehalt an Komponente c) zwischen 1 und 1000 ppm,
der Gehalt an Komponente d) zwischen 0,0001 bis 5 % liegt,
wobei sich die Mengenangaben jeweils auf das Gesamtgewicht der Mischung beziehen.

Gegenstand dieser Erfindung ist zudem ein Verfahren zur Herstellung der erfindungsgemäßen vernetzbaren Mischungen. Dabei werden vorzugsweise die Komponenten a) und d) vermischt, danach die Komponente c) zugegeben und abschließend die Komponente b) hinzugefügt. Ebenfalls möglich ist die Herstellung einer Mischung aus a) und b), die Zudosierung von b) und abschließend von c). Das Nachdosieren der Komponente c) sorgt (neben der Zusammensetzung) für eine Herabsetzung der Reaktionsgeschwindigkeit.

Gegenstand der Erfindung ist zudem die Verwendung von Phosphorverbindungen der Formel I als Inhibitor sowie die Verwendung einer Mischung aus mindestens einer Phosphorverbindung der Formel I und einer Pt-Verbindung oder Pt elementar zur Steuerung der Vernetzungsgeschwindigkeit in additionsvernetzenden Siliconsystemen.

Die folgenden Beispiele dienen der Erläuterung der Erfindung. Die Erfindung ist jedoch nicht auf die Beispiele beschränkt.

### Ausführungsbeispiele

In den folgenden Beispielen beziehen sich, sofern nicht anderweitig definiert, alle Gewichtsteile und Prozentangaben auf das Gewicht der gesamten Mischung.

Die eingesetzten Verbindungen lassen sich wie folgt definieren:

| **Bezeichnung** | **Chem. Zusammensetzung** | **Viskosität** | **Si-Vi-Gehalt** | **Si-H-Gehalt** |
|---|---|---|---|---|
| Polysiloxan A | M^{Vi}₂Dₙ | 1000 Pa s | 0,005 mmol g⁻¹ | - |
| Polysiloxan B | M₂DₙD^{Vi}ₘ | 1150 Pa s | 0,024 mmol g⁻¹ | - |
| Polysiloxan C | M₂DₙD^{H}ₘ | 35 mPa s | - | 4,3 mmol g⁻¹ |
| Polysiloxan D | M^{Vi}₂Dₙ | 10 Pa s | 0,05 mmol g⁻¹ | - |

Die eingesetzte Grundmischung bestand aus:
55 Gew.-% Polysiloxan A,
19 Gew.-% Polysiloxan B und
26 Gew.-% oberflächenmodifizierte pyrogene Kieselsäure.

Der eingesetzte Inhibitorbatch setzte sich wie folgt zusammen:
99,915 Gew.-% Grundmischung und
0,085 Gew.-% Phosphor-organische Verbindung des Typs P(OR)₃ und
der eingesetzte Katalysatorbatch bestand aus:
99,88 Gew.-% Polysiloxan D und
0,22 Gew.-% Pt (in Form eines Vinylsiloxankomplexes)

### Beispiel 1

Zu den in der Tabelle 1 angegebenen Teilen der Grundmischung wurden die unten aufgeführten Mengen an Inhibitorbatch und Katalysatorbatch zugegeben. Die Menge an Katalysatorbatch wurde so gewählt, daß Gehalt an metallischem Pt in allen Mischungen 10 ppm, bezogen auf das Gewicht der Gesamtmischung, betrug. Die Menge an Inhibitorbatch wurde so gewählt, daß das molare Verhältnis von Phosphor-organischer Verbindung zu dem Pt-Komplex in allen Mischungen 2 : 1 betrug.

Abschließend wurden 1,3 g des Polysiloxans C zugegeben. Das molare Verhältnis von direkt an das Si-Atom gebundenen Vinylgruppen zu direkt an das Si-Atom gebundenen H-Atomen betrug in allen Mischungen 1:2,5.

**Tabelle 1:**

| Einsatzmengen, angegeben in Gew.-Teilen | | | |
|---|---|---|---|
| Einwaagen an | R = Phenyl | R = 4-tert.-Butylphenyl | R = 2,4-ditert.-Butylphenyl |
| Grundmischung | 95,6 | 93,5 | 91,2 |
| Inhibitorbatch | 4,2 | 6,5 | 8,8 |
| Katalysatorbatch | 0,5 | 0,5 | 0,5 |

Sämtliche Mischungen besaßen eine Topfzeit bei Raumtemperatur von mehr als vier Wochen.

Von diesen Mischungen wurden jeweils Vulkameterkurven bei einer Temperatur von T = 140 °C aufgenommen und die t₆₀-Zeiten bestimmt.

In der nachfolgenden Tabelle 2 ist der chemische Aufbau von R in der Phosphor-organischen Verbindung des Typs P(OR)₃ sowie die t₆₀-Zeit bei T = 140 °C aufgeführt

**Tabelle 2:**

| R = | t₆₀-Zeit bei T = 140 °C |
|---|---|
| Phenyl | 19,73 |
| 4-tert.-Butylphenyl | 9,69 |
| 2,4-di-tert.-Butylphenyl | 1,22 |

Die Systeme werden umso schneller, je sterisch anspruchsvoller der Rest R in der Phosphor-organischen Verbindung des Typs P(OR)₃ ist.

## Patentansprüche

1. Vernetzbare Mischung, enthaltend als Komponenten
a) mindestens ein Polysiloxan, das über mindestens zwei olefinisch oder acetylenisch ungesättigte Mehrfachbindungen verfügt,
b) mindestens ein Polyhydrogensiloxan, das über mindestens zwei direkt an das Silizium gebundene Wasserstoffatome verfügt,
c) mindestens eine die Hydrosilylierung katalysierende Substanz,
d) mindestens eine Phosphorverbindung der allgemeinen Formel 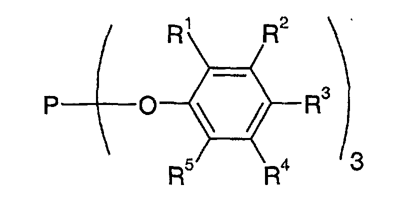 mit
R¹, R², R³, R⁴, R⁵ = H, CₙH₂ₙ₊₁ und n = 1-15, CₐH₂ₐ₋₁ und a = 3-15 und/oder CₙF₂ₙ₊₁,
wobei
R¹, R², R³, R⁴ und R⁵ gleich oder verschieden sein können und nicht alle Reste R¹, R², R³, R⁴ und R⁵ = H sind, und worin die genannten aliphatischen Reste linear oder verzweigt sind und die darin enthaltenen H-Atome gegebenenfalls durch die Gruppen ausgewählt aus -NH₂, -COOH, -F, -Br, -Cl, -CN, -C₆H₅, -C₆H₄(CH₃) ersetzt sein können,
und
e) gegebenenfalls weitere Hilfsstoffe.

2. Vernetzbare Mischung nach Anspruch 1, **dadurch gekennzeichnet, daß** die Komponente c) eine Pt-Verbindung oder Platinkomplexe oder elementares Platin auf einer Trägersubstanz ist.

3. Vernetzbare Mischung nach einem der Ansprüche 1 oder 2, **dadurch gekennzeichnet, daß** Komponente c) ein Platin-Vinylsiloxankomplex ist, in dem das Siloxan über mindestens zwei olefinisch ungesättigte Doppelbindungen verfügt.

4. Vernetzbare Mischung nach einem oder mehreren der Ansprüche 1 bis 3, **dadurch gekennzeichnet, daß** diese zusätzlich Wasser enthalten kann.

5. Vernetzbare Mischung nach einem oder mehreren der Ansprüche 1 bis 3, **dadurch gekennzeichnet, daß** diese zusätzlich ein organisches Lösungsmittel enthalten kann.

6. Vernetzbare Mischung nach einem oder mehreren der Ansprüche 1 bis 5, **dadurch gekennzeichnet, daß** die Komponenten a) und b) in einem solchen Mengenverhältnis vorliegen, daß das Verhältnis SiH:Si-Vinyl zwischen 0,01 und 300 beträgt, der Gehalt an Komponente c) zwischen 0,1 und 1000 ppm, der Gehalt an Komponente d) zwischen 0,0001% bis 5 % liegt, wobei sich die Mengenangaben jeweils auf das Gesamtgewicht der Mischung beziehen.

7. Verfahren zur Herstellung einer vernetzbaren Mischung nach einem oder mehreren der Ansprüche 1 bis 6, **dadurch gekennzeichnet, daß** die Komponenten a) und d) vermischt, anschließend die Komponenten c) und zuletzt die Komponente b) zugegeben werden.

## Claims

1. Crosslinkable mixture comprising as components
a) at least one polysiloxane which contains at least two olefinically or acetylenically unsaturated multiple bonds,
b) at least one polyhydrosiloxane which contains at least two hydrogen atoms bonded directly to the silicon,
c) at least one substance catalyzing hydrosilylation,
d) at least one phosphorus compound of the general formula 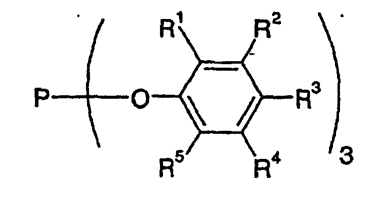 where
R¹, R², R³, R⁴, R⁵ = H, CₙH₂ₙ₊ᵢ and n = 1-15, CₐH₂ₐ₋₁ and a = 3-15 and/or CₙF₂ₙ₊₁, where
R¹, R², R³, R⁴ and R⁵ can be identical or different and not all radicals R¹, R², R³, R⁴ and R⁵ = H, and in which the aliphatic radicals are linear or branched and the hydrogen atoms they contain may have been replaced where appropriate by groups selected from -NH₂, -COOH, -F, -Br, -Cl, -CN, -C₆H₅, -C₆H₄(CH₃), and
e) optionally further auxiliary substances.

2. Crosslinkable mixture according to Claim 1, **characterized in that** component c) is a Pt compound or platinum complexes or elemental platinum on a support substance.

3. Crosslinkable mixture according to one of Claims 1 and 2, **characterized in that** component c) is a platinum/vinylsiloxane complex in which the siloxane contains at least two olefinically unsaturated double bonds.

4. Crosslinkable mixture according to one or more of Claims 1 to 3, **characterized in that** it may further comprise water.

5. Crosslinkable mixture according to one or more of Claims 1 to 3, **characterized in that** it may further comprise an organic solvent.

6. Crosslinkable mixture according to one or more of Claims 1 to 5, **characterized in that** components a) and b) are present in a quantitative ratio such that the ratio SiH:Si-vinyl is between 0.01 and 300, the concentration of component c) is between 0.1 and 1000 ppm, the concentration of component d) is 0.0001% to 5%, the quantity figures being based in each case on the total weight of the mixture.

7. Process for preparing a crosslinkable mixture according to one or more of Claims 1 to 6, **characterized in that** components a) and d) are mixed, then components c) and finally component b) are added.

## Revendications

1. Mélange réticulable contenant comme composants
a) au moins un polysiloxane qui dispose d'au moins deux liaisons multiples oléfiniquement ou acétyléniquement insaturées,
b) au moins un polyhydrogénosiloxane qui dispose d'au moins deux atomes d'hydrogène liés directement au silicium,
c) au moins une substance catalysant l'hydrosilylation,
d) au moins un composé du phosphore de formule générale 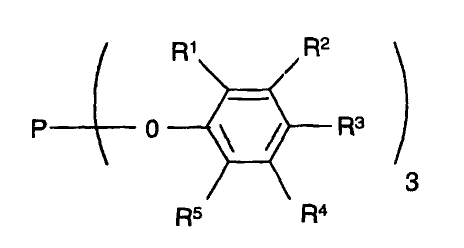 avec
R¹, R², R³, R⁴, R⁵=H, CₙH₂ₙ₊₁ et n=1-15, CₐH₂ₐ₋₁ et a=3-15 et/ou CₙF_{2n+1+,} où
R¹, R², R³, R⁴ et R⁵ peuvent être identiques ou différents et tous les restes R¹, R², R³, R⁴ et R⁵ ne sont pas H, et/où les restes aliphatiques cités sont linéaires ou ramifiés et les atomes H qui y sont contenus peuvent éventuellement être remplacés par les groupes choisis parmi -NH₂, -COOH, -F, -Br, -Cl, -CN, -C₆H₅, -C₆H₄(CH₃),
et
e) éventuellement d'autres adjuvants.

2. Mélange réticulable selon la revendication 1, **caractérisé en ce que** le composant c) est un composé de Pt ou des complexes du platine ou du platine élémentaire sur une substance support.

3. Mélange réticulable selon l'une des revendications 1 et 2, **caractérisé en ce que** le composant c) est un complexe platine-vinylsiloxane dans lequel le siloxane dispose d'au moins deux doubles liaisons oléfiniquement insaturées.

4. Mélange réticulable selon une ou plusieurs des revendications 1 à 3, **caractérisé en ce qu'**il peut contenir en outre de l'eau.

5. Mélange réticulable selon une ou plusieurs des revendications 1 à 3, **caractérisé en ce qu'**il peut contenir en outre un solvant organique.

6. Mélange réticulable selon une ou plusieurs des revendications 1 à 5, **caractérisé en ce que** les composants a) et b) sont présents dans des proportions telles que le rapport SiH : Si-vinyle est 0,01 à 300, la teneur en composant c) est située entre 0,1 et 1000 ppm, la teneur en composant d) est située entre 0,0001 % et 5 %, les indications de quantités étant rapportées dans chaque cas à la masse totale du mélange.

7. Procédé de préparation d'un mélange réticulable selon une ou plusieurs des revendications 1 à 6, **caractérisé en ce que** l'on mélange les composants a) et d), puis on ajoute le composant c) et enfin le composant b).
